# EUROPEAN PATENT APPLICATION

(11) **EP 4 258 427 A1**
(43) Date of publication of application: **11.10.2023**
(21) Application number: 20964284.2
(22) Date of filing: 03.12.2020
(51) Int. Cl.: H01M 50/10

(54) **BATTERY**

(71) Applicant: KABUSHIKI KAISHA TOSHIBA, Minato-ku Tokyo 105-0023 (JP)
(72) Inventor: YAMAMOTO, Kuniaki, Tokyo 105-0023 (JP); NEGISHI, Nobuyasu, Tokyo 105-0023 (JP); SHINODA, Tatsuya, Tokyo 105-0023 (JP); YAMAGISHI, Genki, Tokyo 105-0023 (JP); NITTA, Wataru, Tokyo 105-0023 (JP)
(74) Representative: Hoffmann Eitle
(86) International application number: PCT/JP2020/045057
(87) International publication number: WO 2022/118432

(57) **Abstract**

In an embodiment, a battery includes a container, a lid member, an electrode group, an electrode terminal and an electrode group retainer. The lid member is attached to a peripheral wall of the container with an opening of an inner cavity being closed. In the electrode group housed in the inner cavity, a current collecting tab protrudes, and the electrode terminal is electrically connected to the current collecting tab. The electrode group retainer is arranged between the electrode group and the lid member in the inner cavity. A proximity plate portion of the electrode group retainer is close to the electrode group from a side where the lid member is located and forms a space between the lid member and thereof. A facing surface of the proximity plate portion is formed to have a shape that is along an outer surface of an end portion of the electrode group on a side where the lid member is located.

## Description

### FIELD

Embodiments described herein of in this invention relate generally to batteries.

### BACKGROUND

With the progress of electronic devices such as mobile phones and personal computers, batteries such as secondary batteries used in the electronic devices are required to be small in size and light in weight. A lithium ion secondary battery is an example of a secondary battery that is reduced in size and weight and that has a high energy density. Meanwhile, secondary batteries such as lead-acid storage batteries and nickel-metal hydride batteries are used as large-sized, high-capacity power sources mounted on vehicles such as electric automobiles, hybrid automobiles, electric motorcycles or forklifts. In recent years, lithium-ion secondary batteries with a high energy density have been developed for use as large-sized, high-capacity power sources to be mounted on vehicles. In the development of lithium-ion secondary batteries to be mounted on vehicles, it is required to realize longer battery life and improved safety, as well as to increase the size and capacity of the batteries.

Batteries, such as lithium ion secondary batteries, include a battery in which an electrode group provided with a positive electrode and a negative electrode is housed in the inner cavity of a container. In this type of battery, the container includes a bottom wall and a peripheral wall, and the inner cavity of the container is open in the height direction such that the opening is opposite to the bottom wall. A lid member is attached to the peripheral wall of the container, and the opening of the inner cavity is closed by the lid member. In the battery, electrode terminals are arranged on the outer surface of the lid member in the state where they are exposed to the outside. In the inner cavity, a current collecting tab of the electrode group protrudes outward in the lateral direction intersecting the height direction. The current collecting tab is electrically connected to the electrode terminal via a lead or the like.

In the battery as described above, internal components, such as an electrode group housed in the inner cavity, are restrained by the peripheral wall of the container or the like. Therefore, even if an external impact such as vibration occurs during the traveling of a vehicle in which the battery is mounted, the influence which the external impact may have on the internal components, including the electrode group, the current collecting tab and the lead, is suppressed.

It should be noted here that where the battery as described above is used, a gas may be generated from the electrode group in the inner cavity. Due to the generation of the gas in the inner cavity, the container may expand. The battery is required to properly restrain the movement of the internal components even if a gas is generated in the inner cavity.

### CITATION LIST

### PATENT LITERATURE

Patent Literature 1: Jpn. Pat. Appln. KOKAI Publication 2013-168284
Patent Literature 2: Jpn. Pat. Appln. KOKAI Publication 2006-40899

### SUMMARY

### TECHNICAL PROBLEM

The present invention is intended to provide a battery in which internal components in an inner cavity are properly restrained even if the container expands.

### SOLUTION TO PROBLEM

According to an embodiment, a battery includes a container, a lid member, an electrode group, a current collecting tab, an electrode terminal, an electrode group retainer and a proximity plate portion. The container includes a bottom wall and a peripheral wall and defines an inner cavity that is open in a height direction toward a side opposite to a side where the bottom wall is located. The lid member is attached to the peripheral wall of the container in a state in which an opening of the inner cavity is closed. The electrode group includes a positive electrode and a negative electrode and is housed in the inner cavity of the container. The current collecting tab protrudes outward in the electrode group in a lateral direction intersecting the height direction. The electrode terminal is exposed on an outer surface of the lid member and is electrically connected to the current collecting tab. The electrode group retainer is made of an electrically insulating material and is arranged between the electrode group and the lid member in the inner cavity. The proximity plate portion is provided in the electrode group retainer in a state where the proximity plate portion is close to the electrode group from a side where the lid member is located in the height direction and a space is formed between an inner surface of the lid member and the proximity plate portion. The proximity plate portion includes a facing surface facing the electrode group and the facing surface is formed to have a shape that is along an outer surface of an end portion of the electrode group on a side where the lid member is located.

### BRIEF DESCRIPTION OF THE DRAWINGS

FIG. 1 is a perspective view showing each member of a battery according to a first embodiment in an exploded manner.
FIG. 2 is a perspective view showing the battery according to the first embodiment.
FIG. 3 is a perspective view showing an electrode group retainer of the battery according to the first embodiment.
FIG. 4 is a perspective view showing the electrode group retainer of the battery according to the first embodiment when viewed from a direction different from that shown in FIG. 3.
FIG. 5 is a cross-sectional view showing the electrode group retainer and its neighboring portions of the battery according to the first embodiment in a cross section perpendicular or substantially perpendicular to the lateral direction of the battery.
FIG. 6 is a cross-sectional view showing an electrode group retainer and its neighboring portions of a battery according to a modification in a cross section perpendicular or substantially perpendicular to the lateral direction of the battery.

### DETAILED DESCRIPTION

A description will now be given of embodiments with reference to the accompanying drawings.

### (First Embodiment)

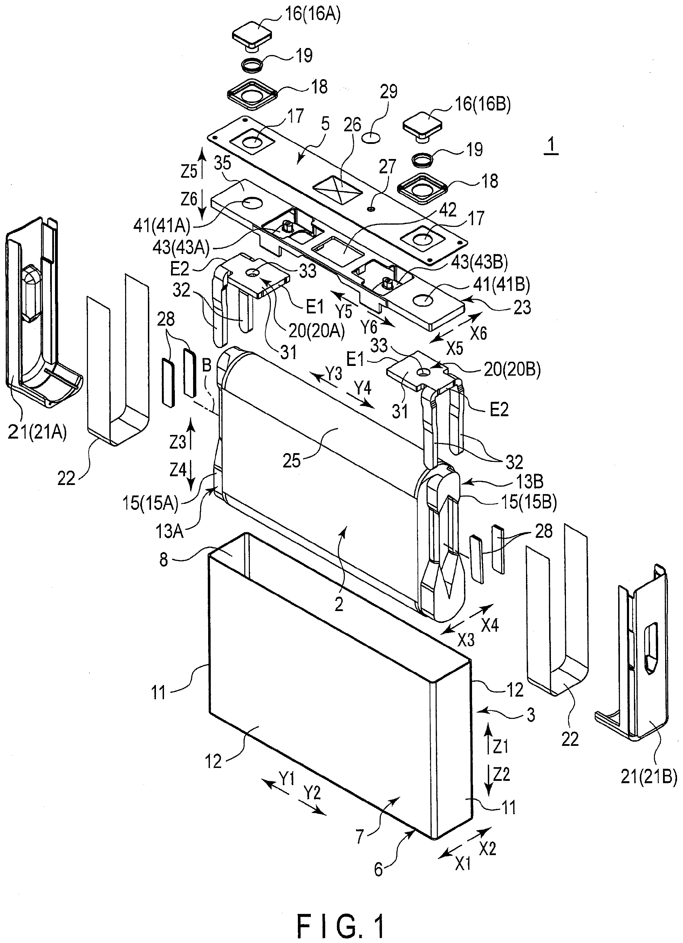

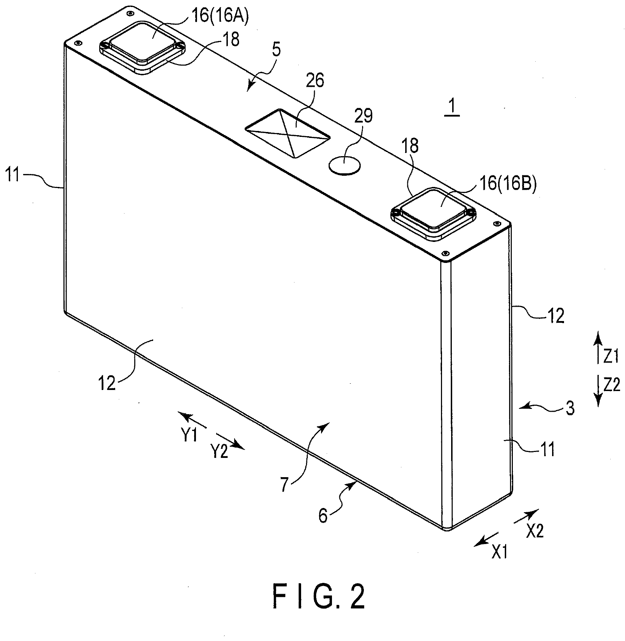

FIGS. 1 and 2 show a battery 1 according to the first embodiment. As shown in FIGS. 1 and 2, the battery 1 includes an electrode group 2, a container 3 and a lid member 5. Each of the container 3 and the lid member 5 is made of metal, such as aluminum, aluminum alloy, iron, copper or stainless steel. The battery 1 (the container 3) is defined in terms of a depth direction (the direction indicated by arrows X1 and X2), a lateral direction (the direction indicated by arrows Y1 and Y2) intersecting the depth direction (perpendicular or substantially perpendicular thereto), and a height direction (the direction indicated by arrows Z1 and Z2) intersecting both the depth direction and the lateral direction (perpendicular or substantially perpendicular thereto). In each of the battery 1 and the container 3, the dimension in the depth direction is smaller than the dimension in the lateral direction and the dimension in the height direction. FIG. 1 is a perspective view showing each member in an exploded manner, and FIG. 2 is a perspective view.

The container 3 includes a bottom wall 6 and peripheral wall 7. An inner cavity 8 in which the electrode group 2 is housed is defined by the bottom wall 6 and the peripheral wall 7. In the height direction, the inner cavity 8 of the container 3 is open toward the side opposite to the side where the bottom wall 6 is located. The peripheral wall 7 include two pairs of side walls 11 and 12. The pair of side walls 11 are opposed to each other such that the inner cavity 8 is sandwiched in the lateral direction. The pair of side walls 12 are opposed to each other such that the inner cavity 8 is sandwiched in the depth direction. Each of the side walls 11 continuously extends along the depth direction between the side walls 12. Each of the side walls 12 continuously extends along the lateral direction between the side walls 11. The lid member 5 is attached to the peripheral wall 7 at an end portion opposite to the bottom wall 6. Therefore, the lid member 5 closes the opening of the inner cavity 8 of the container 3. The lid member 5 and the bottom wall 6 face each other, with the inner cavity 8 sandwiched therebetween in the height direction.

The electrode group 2 includes a positive electrode 13A and a negative electrode 13B. A separator (not shown) is interposed between the positive electrode 13A and the negative electrode 13B in the electrode group 2. The separator is formed of an electrically insulating material, and electrically insulates the positive electrode 13A from the negative electrode 13B.

The positive electrode 13A includes a positive electrode current collector such as a positive electrode current collecting foil, and a positive electrode active material-containing layer (not shown) supported on the surface of the positive electrode current collector. The positive electrode current collector is, for example, an aluminum foil, an aluminum alloy foil or the like and has a thickness of about 10 µm to 20 µm, but the positive electrode current collector is not limited to this example. The positive electrode active material-containing layer contains a positive electrode active material and may optionally contain a binder and a conductive agent. Examples of the positive electrode active material are an oxide, a sulfide and a polymer that can occlude and release lithium ions, but the positive electrode active material is not limited to these examples. The positive electrode current collector includes a positive electrode current collecting tab 15A in a portion where the positive electrode active material-containing layer is not supported.

The negative electrode 13B includes a negative electrode current collector such as a negative electrode current collecting foil, and a negative electrode active material-containing layer (not shown) supported on the surface of the negative electrode current collector. The negative electrode current collector is, for example, an aluminum foil, an aluminum alloy foil, a copper foil or the like and has a thickness of about 10 µm to 20 µm, but the negative electrode current collector is not limited to this example. The negative electrode active material-containing layer contains a negative electrode active material and may optionally contain a binder and a conductive agent. Examples of the negative electrode active material are a metal oxide, a metal sulfide, a metal nitride and a carbon material that can occlude and release lithium ions, but the negative electrode active material is not limited to these examples. The negative electrode current collector includes a negative electrode current collecting tab 15B in a portion where the negative electrode active material-containing layer is not supported.

In one example of the electrode group 2 shown in FIG. 1 etc., the positive electrode 13A, the negative electrode 13B and the separator are wound, with the winding axis B as a center, in the state where the separator is sandwiched between the positive electrode active material-containing layer and the negative electrode active material-containing layer. In the electrode group 2, the positive electrode current collecting tab 15A protrudes from the negative electrode 13B and the separator toward one side in the axial direction along the winding axis B (i.e., the direction indicated by arrows Y3 and Y4). In the electrode group 2, the negative electrode current collecting tab 15B protrudes from the positive electrode 13A and the separator toward the side opposite to the side where the positive electrode current collecting tab 15A protrudes in the axial direction along the winding axis B. Therefore, the pair of current collecting tabs 15 (the positive electrode current collecting tab 15A and the negative electrode current collecting tab 15B) protrude toward opposite sides in the axial direction along the winding axis B.

The electrode group 2 is defined in terms of a width direction (the direction indicated by arrows Z3 and Z4) intersecting (perpendicular to or substantially perpendicular to) the axial direction of the winding axis B (the protruding direction of the current collecting tabs 15), and a thickness direction (the direction indicated by arrows X3 and X4) intersecting both the axial direction of the winding axis B and the width direction. In the electrode group 2, the dimension in the thickness direction is smaller than the dimension in the axial direction and the dimension in the width direction. In other words, the electrode group 2 is formed having a flat shape. Moreover, in each of the pair of current collecting tabs 15, a plurality of belt-like portions are bundled.

In the present embodiment, the electrode group 2 is arranged in the inner cavity 8 in the state where the winding axis B is along the lateral direction of the battery 1, that is, in the state where the axial direction corresponds or substantially corresponds to the lateral direction of the battery 1. In the electrode group 2 arranged in the inner cavity 8, the width direction corresponds or substantially corresponds to the height direction of the battery 1, and the thickness direction corresponds or substantially corresponds to the depth direction of the battery 1. In the electrode group 2, each of the pair of current collecting tabs 15 protrudes outward in the lateral direction of the battery 1. The positive electrode current collecting tab 15A protrudes from the negative electrode 13B and the separator toward one side in the lateral direction of the battery 1. The negative electrode current collecting tab 15B protrudes from the positive electrode 13A and the separator toward the side opposite to the side where the positive electrode current collecting tab 15A protrudes in the lateral direction of the battery 1.

In the inner cavity 8, the electrode group 2 holds (impregnated with) an electrolytic solution (not shown). The electrolytic solution may be a nonaqueous electrolytic solution in which an electrolyte is dissolved in an organic solvent, or an aqueous electrolytic solution such as an aqueous solution. A gel electrolyte may be used instead of the electrolytic solution, or a solid electrolyte may be used. Where a solid electrolyte is used as the electrolyte, the solid electrolyte in the electrode group is interposed between the positive electrode 13A and the negative electrode 13B, in place of the separator. In this case, the positive electrode 13A is electrically insulated from the negative electrode 13B by the solid electrolyte.

In the battery 1, a pair of electrode terminals 16 are attached to the lid member 5. The electrode terminals 16 are made of a conductive material such as metal. One of the electrode terminals 16 is a positive electrode terminal (16A) of the battery 1, and the other one of the pair of electrode terminals 16, which is different from the positive electrode terminal (16A), is a negative electrode terminal (16B) of the battery 1. The electrode terminals 16 are arranged on the outer surface of the lid member 5 in the state where they are exposed to the outside of the battery 1. The pair of electrode terminals 16 are arranged apart from each other in the lateral direction of the battery 1.

A pair of through-holes 17 are provided in the lid member 5. Each of the through-holes 17 penetrates the lid member 5 along the height direction of the battery 1. On the outer surface of the lid member 5, an insulating member 18 is provided between each of the electrode terminals 16 and the lid member 5. An insulating gasket 19 is arranged in each of the through-holes 17. Each of the electrode terminals 16 is electrically insulated from the lid member 5 and the container 3 by the insulating member 18 and the insulating gasket 19.

A pair of leads 20 are arranged in the inner cavity 8 of the container 3. One of the pair of leads 20 is a positive electrode side lead (20A), and the other one of the pair of leads 20, which is different from the positive electrode side lead (20A), is a negative electrode side lead (20B). The positive electrode current collecting tab 15A of the electrode group 2 is electrically connected to the positive electrode terminal 16A, with at least the positive electrode side lead 20A interposed. Therefore, the positive electrode side lead 20A forms at least part of an electrical path between the positive electrode current collecting tab 15A and the positive electrode terminal 16A. The negative electrode current collecting tab 15B of the electrode group 2 is electrically connected to the negative electrode terminal 16B, with at least the negative electrode side lead 20B interposed. Therefore, the negative electrode side lead 20B forms at least part of an electrical path between the negative electrode current collecting tab 15B and the negative electrode terminal 16B. Each of the leads 20 is made of a conductive material such as metal. Examples of the conductive material forming the leads 20 include aluminum, stainless steel, copper, iron, etc.

A pair of insulating guards 21 and a pair of insulating tapes 22 are arranged in the inner cavity 8 of the container 3. Each of the insulating guards 21 and the insulating tapes 22 is made of an electrically insulating material. An insulating guard 21A, which is one of the insulating guards 21, is arranged between the positive electrode side lead 20A (the positive current collecting tab 15A) and the peripheral wall 7 of the container 3. Each of the positive electrode side lead 20A and the positive electrode current collecting tab 15A is prevented from coming into contact with the container 3 and is thus electrically insulated from the container 3 by the insulating guard 21A. An insulating guard 21B, which is one of the insulating guards 21 and different from the insulating guard 21A, is.arranged between the negative electrode side lead 20B (the negative electrode current collecting tab 15B) and the peripheral wall 7 of the container 3. Each of the negative electrode side lead 20B and the negative electrode current collecting tab 15B is prevented from coming into contact with the container 3 and is thus electrically insulated from the container 3 by the insulating guard 21B. Each of the insulating guards 21 is secured to the electrode group 2 by a corresponding one of the insulating tapes 22.

An electrode group retainer 23 is arranged between the electrode group 2 and the lid member 5 in the height direction of the battery 1. The electrode group retainer (internal insulating member) 23 is made of an electrically insulating material. The pair of current collecting tabs 15 and the pair of leads 20 are prevented from coming into contact with the lid member 5 by the electrode group retainer 23 and are thus electrically insulated from the lid member 5.

In one example shown in FIG. 1 and FIG. 2, the lid member 5 has a gas release valve 26 and a liquid injection port 27. A sealing plate 29 that closes the liquid injection port 27 is welded to the outer surface of the lid member 5. The gas release valve 26 and the liquid injection port 27 are arranged between the pair of electrode terminals 16 in the lateral direction of the battery 1. It should be noted that in one example, the gas release valve 26 and the liquid injection port 27 need not be provided for the battery 1.

In one example shown FIG. 1 etc., each of the leads 20 includes a top plate portion 31 and a pair of leg portions 32. The top plate portion 31 of each lead 20 is arranged in the inner cavity 8 in the state where the thickness direction thereof corresponds or substantially corresponds to the height direction of the battery 1. Further, the top plate portion 31 of each lead 20 is arranged between the electrode group retainer 23 and the electrode group in the height direction of the battery 1. The top plate portion 31 of each of the leads 2 extends along the lateral direction of the battery 1 from an extended end E1 to an extended end E2. In each of the top plate portions 31, the extended end E2 is located laterally outward of the battery 1 with respect to the extended end E1.

Each of the leads 20 has a through-hole 33 that penetrates the top plate portion 31 in the height direction of the battery 1 (in the thickness direction of the top plate portion 31). A corresponding one of the electrode terminals 16 is connected to each of the leads 20 at the through-hole 33. Therefore, the through-hole 33 of each of the leads 20 serves as one connection position with the corresponding electrode terminal 16. Each of the electrode terminals 16 are connected to the corresponding lead 20 by caulking or the like.

In each of the leads 20, the pair of leg portions 32 are connected to the top plate portion 31 in the end portion on the side where the extended end E2 is located. Therefore, in each of the leads 20, the leg portions 32 are located laterally outward of the battery 1 with respect to the through-hole 33 (i.e., the connection position of the electrode terminal 16). Also, in each of the leads 20, the pair of leg portions 32 are arranged apart from each other in the depth direction of the battery 1. In each of the leads 20, the leg portions 32 extend along the height direction of the battery 1 from the connection position of the top plate portion 31 and bend relative to the top plate portion 31 toward the side where the bottom wall 6 is located.

In one example shown in FIG. 1 etc., each of the current collecting tabs 15 includes a bundled portion at two positions, where a plurality of belt-like portions are bundled. Also, two pairs of backup leads 28 (four backup leads) are arranged in the inner cavity 8. The backup leads 28 are made of a conductive material such as metal. In each of the current collecting tabs 15, each bundled portion of the belt-like portions is sandwiched by the corresponding one of backup leads 28. In each of the current collecting tabs 15, each bundled portion is joined to a corresponding one of the leads 20, with the corresponding one of the backup leads 28 being interposed therebetween. In each of the current collecting tabs 15, each bundled portion is joined to the corresponding one of the leads 20 in the corresponding one of the pair of leg portions 32. Each of the current collecting tabs 15 is joined to a corresponding one of the leads 20, for example, by ultrasonic welding.

It should be noted that in one example, each lead 20 may be provided with only one leg portion 32. In this case, in each of the current collecting tabs 15, the bundled portion of the plurality of belt-like portions is formed at one location only. In each of the current collecting tabs 15, the bundled portion of the belt-like portions is joined to the leg portion 32 of the corresponding one of the leads 20. Also, in one example, the backup leads 28 are not necessarily provided, and at least one of the pair of current collecting tabs 15 may be joined directly to the corresponding lead (the corresponding one of the leads 20A and 20B).

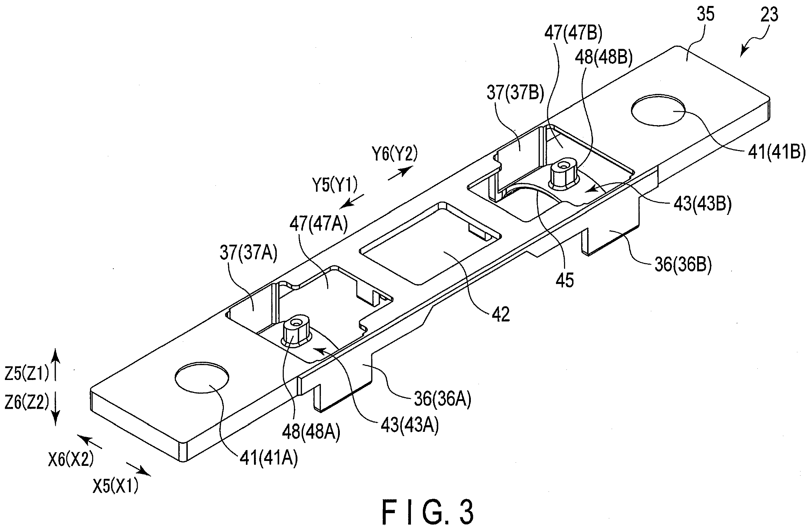

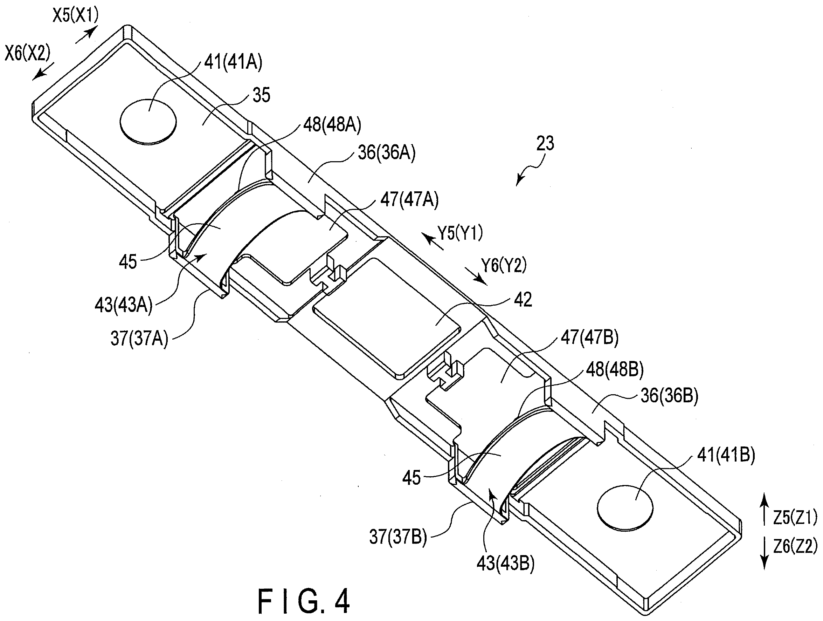

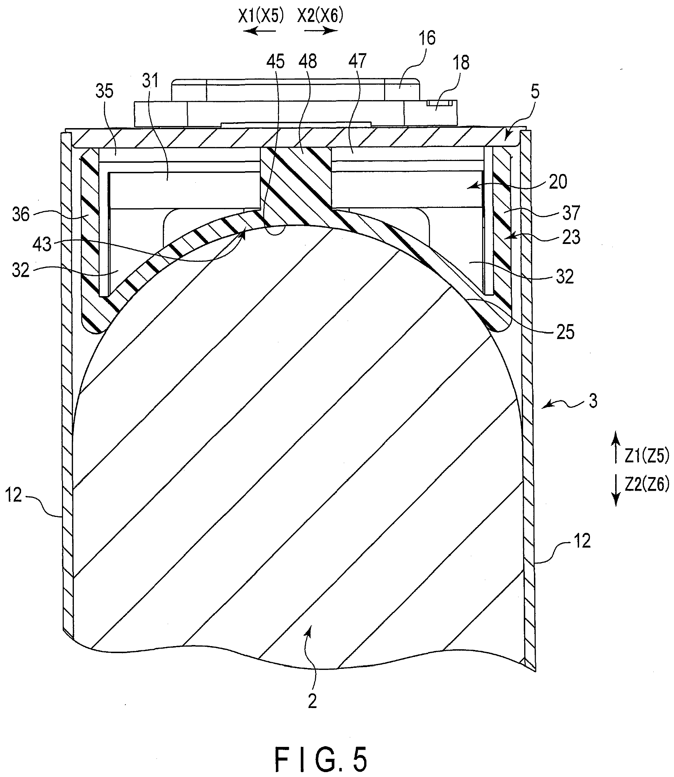

FIG. 3 and FIG. 4 show the electrode group retainer 23, and FIG. 5 shows the electrode group retainer 23 and its neighboring portions. FIGS. 3 and 4 are perspective views, and viewing directions in them are different from each other. FIG. 5 shows a cross section perpendicular or substantially perpendicular to the lateral direction of the battery 1. As shown in FIG. 1, FIGS. 3 to 5 etc., the electrode group retainer 23 is defined in terms of a length direction (the direction indicated by arrows Y5 and Y6), a width direction (the direction indicated by arrows X5 and X6) intersecting the length direction (perpendicular or substantially perpendicular thereto), and a thickness direction (the direction indicated by arrows Z5 and Z6) intersecting both the length direction and the width direction (perpendicular or substantially perpendicular thereto).

In the electrode group retainer 23, the dimension in the thickness direction is smaller than the dimension in the width direction, and the dimension in the width direction is smaller than the dimension in the length direction. In the inner cavity 8, the electrode group retainer 23 is arranged in the state where the thickness direction thereof corresponds or substantially corresponds to the height direction of the battery 1. In the electrode group retainer 23 arranged in the inner cavity 8, the width direction corresponds or substantially corresponds to the depth direction of the battery 1, and the length direction corresponds or substantially corresponds to the lateral direction of the battery 1.

The electrode group retainer 23 includes a substrate portion 35, two protruding plate portions 36 (36A and 36B), and two protruding plate portions 37 (37A and 37B). Each of the protruding plate portions 36 and 37 protrudes from the substrate portion 35 to one side in the thickness direction of the electrode group retainer 23. Each of the protruding plate portions 36 and 37 is provided along the outer edge of the substrate portion 35 and extends along the length direction of the electrode group retainer 23. The electrode group retainer 23 is arranged in the inner cavity 8 in the state where the protruding plate portions 36 and 37 protrude from the substrate portion 35 toward the side where the electrode group 2 is located in the height direction of the battery 1. The protruding plate portions 36A and 37A are arranged apart from the protruding plate portions 36B and 37B in the length direction of the electrode group retainer 23 (in the lateral direction of the battery 1). The protruding plate portions 36A and 37A are arranged apart from each other in the width direction of the electrode group retainer 23 (in the depth direction of the battery 1) and face each other. Also, the protruding plate portions 36B and 37B are arranged apart from each other in the width direction of the electrode group retainer 23 (in the depth direction of the battery 1) and face each other.

The substrate portion 35 of the electrode group retainer 23 is sandwiched between the top plate portion 31 of each lead 20 and the lid member 5 in the height direction of the battery 1. A pair of through-holes 41 (41A and 41B) are formed in the substrate portion 35 such that they are along the thickness direction of the electrode group retainer 23. Each of the through-holes 41 penetrates the substrate portion 35 along the height direction of the battery 1. The pair of through-holes 41 are arranged apart from each other in the lateral direction of the battery 1 (in the length direction of the electrode group retainer 23). Each of the electrode terminals 16 is inserted through the corresponding one of the through-holes 17 of the lid member 5, the corresponding one of the through-holes 41 of the electrode group retainer 23, and the through-hole 33 of the corresponding one of the leads 20 in the order mentioned. Each of the electrode terminals 16 is connected to the corresponding one of the leads 20 at the through-hole 33, as described above.

An opening 42 is formed in the substrate portion 35 of the electrode group retainer 23. The opening 42 penetrates the substrate portion 35 along the height direction of the battery 1. The opening 42 is arranged between the pair of electrode terminals 16 (the pair of through-holes 41) in the lateral direction of the battery 1 (in the length direction of the electrode group retainer 23). In the battery 1 of one example shown in FIGS. 1 and 3 etc., the opening 42 is arranged at the center in the lateral direction. In the electrode group retainer 23, the opening 42 is formed across the region including a position facing the gas release valve 26 and a position facing the liquid injection port 27. The opening 42 faces the gas release valve 26 and the liquid injection port 27 from the side where the electrode group 2 is located in the height direction of the battery 1.

The electrode group retainer 23 is provided with two proximity plate portions 43 (43A and 43B). Each of the proximity plate portions 43 is adjacent to the electrode group 2 from the side where the lid member 5 is located in the height direction of the battery 1. In the present embodiment, each of the proximity plate portions 43 comes into contact with the electrode group 2 from the side where the lid member 5 is located. The proximity plate portion 43A extends along the depth direction of the battery 1 (the width direction of the electrode group retainer 23) between the protruding plate portions 36A and 37A. The proximity plate portion 43B extends along the depth direction of the battery 1 (the width direction of the electrode group retainer 23) between the protruding plate portions 36B and 37B.

In the present embodiment, the electrode group 2 is wound, with the winding axis B along the lateral direction of the battery 1 being as a center, as described above. In the electrode group 2, therefore, a curved surface 25 is formed on the outer surface of the end portion on one side of the width direction. In the battery 1, the curved surface 25 is an end of the electrode group 2 on the side where the lid member 5 is located, and forms an end surface of the electrode group 2 on the side where the lid member 5 is located. That is, in the electrode group 2, the curved surface 25 is formed by the outer surface of the end portion on the side where the lid member 5 is located. In the electrode group 2, the curved surface 25 is formed on a portion different from the current collecting tabs 15 (15A and 15B). In a cross section perpendicular or substantially perpendicular to the lateral direction of the battery 1 (the axial direction of the electrode group 2), the curved surface 25 is arcuate.

Each of the proximity plate portions 43 includes a facing surface 45 that faces the curved surface 25 of the electrode group 2 (the outer surface of the end portion on the side where the lid member 5 is located). In the present embodiment, each of the proximity plate portions 43 comes into contact with the electrode group 2 at the facing surface 45. In the electrode group 2, the facing surfaces 45 of the proximity plate portions 43 are close to the curved surface 25 and its neighboring portions, that is, to the outer surface of the end portion on the side where the lid member 5 is located. In the electrode group 2, therefore, the proximity plate portions 43 of the electrode group retainer 23 are adjacent to a portion different from the current collecting tabs 15. Each of the facing surfaces 45 of the proximity plate portions 43 is formed to have a shape along the curved surface 25 of the electrode group 2, and is formed to have a shape along the outer surface of the end portion of the electrode group 2 on the side where the lid member 5 is located. Therefore, each of the facing surfaces 45 of the proximity plate portions 43 is formed to have a curved surface that is along the curved surface 25. In a cross section perpendicular or substantially perpendicular to the lateral direction of the battery 1 (the length direction of the electrode group retainer 23), the facing surfaces 45 of the proximity plate portions 43 are arcuate.

The radius R1 of curvature of the curved surface 25 of the electrode group 2, and the radius R2 of curvature of the facing surfaces 45 of each of the proximity plate portions 43 of the electrode group retainer 23 will be defined. Preferably, the radius R2 of curvature is from 90% to 110% of the radius R1 of curvature. More preferably, the radius R2 curvature is from 95% to 105% of the radius R1 of curvature.

In the present embodiment, the proximity plate portions 43A and 43B are arranged apart from each other in the lateral direction of the battery 1 (the length direction of the electrode group retainer 23). The proximity plate portion 43A is formed between the opening 42 and the through-hole 41A in the lateral direction of the battery 1, and the proximity plate portion 43B is formed between the opening 42 and the through-hole 41B in the lateral direction of the battery 1. In the battery 1, therefore, each of the proximity plate portions 43 is located apart from the current collecting tabs 15, the electrode terminals 16 and the leads 20 in the lateral direction. Each of the proximity plate portions 43 is located laterally inward of the battery 1 with respect to the current collecting tabs 15, the electrode terminals 16 and the leads 20. Therefore, each of the proximity plate portions 43 is located between the positive electrode current collecting tab 15A and the negative electrode current collecting tab 15B and between the positive electrode terminal 16A and the negative electrode terminal 16B in the lateral direction of the battery 1. In the battery 1, each of the proximity plate portions 43 is located away from the gas release valve 26, the liquid injection port 27 and the opening 42 in the lateral direction.

Two through-holes 47 (47A and 47B) are formed in the substrate portion 35 of the electrode group retainer 23 such that the two through-holes 47 are along the thickness direction of the electrode group retainer 23. Each of the through-holes 47 penetrates the substrate portion 35 along the height direction of the battery 1. The through-hole 47A is formed between the through-hole 41A and the opening 42 in the length direction of the electrode group retainer 23 (in the lateral direction of the battery 1), and the through-hole 47B is formed between the through-hole 41B and the opening 42 in the length direction of the electrode group retainer 23. In the electrode group retainer 23, the through-hole 47A is arranged such that it is not shifted or is hardly shifted from the proximity plate portion 43A in the length direction (the lateral direction of the battery 1), and the through-hole 47B is arranged such that it is not shifted or is hardly shifted from the proximity plate portion 43B in the length direction. In the inner cavity 8 of the battery 1, the through-hole 47A is formed adjacent to the proximity plate portion 43A on the side where the lid member 5 is located, and the through-hole 47B is formed adjacent to the proximity plate portion 43B on the side where the lid member 5 is located.

Since the through-holes 47 are formed in the electrode group retainer 23 as described above, a space is formed between each of the proximity plate portions 43 and the lid member 5 in the height direction of the battery 1. Between the proximity plate portion 43A and the lid member 5, the surface on the opposite side of the facing surface 45 in the proximity plate portion 43A is adjacent to the space from the side where the electrode group 2 is located, and the inner surface of the lid member 5 is adjacent to the space from the side opposite to the electrode group 2. Between the proximity plate portion 43B and the lid member 5, the surface on the opposite side of the facing surface 45 in the proximity plate portion 43B is adjacent to the space from the side where the electrode group 2 is located, and the inner surface of the lid member 5 is adjacent to the space from the side opposite to the electrode group 2.

In the electrode group retainer 23, a convex portion 48A protrudes from the proximity plate portion 43A toward the lid member 5, and a convex portion 48B protrudes from the proximity plate portion 43B toward the lid member 5. Therefore, each of the convex portions 48 (48A and 48B) protrudes from the corresponding one of the proximity plate portions 43 toward the lid member 5. In the battery 1, each of the convex portions 48 contacts the lid member 5 at the protruding end from the corresponding one of the proximity plate portions 43. In the electrode group retainer 23, each of the convex portions 48 is formed at the center in the width direction (the depth direction of the battery 1). In the battery 1, therefore, a space is formed on both sides of the convex portion 48 in the depth direction such that the space is between each of the proximity plate portions 43 and the lid member 5. That is, in the region between the proximity plate portion 43A and the lid member 5, a space is formed between the convex portion 48A and the protruding plate portion 36A and between the convex portion 48A and the protruding plate portion 37A. In the region between the proximity plate portion 43B and the lid member 5, a space is formed between the convex portion 48B and the protruding plate portion 36B and between the convex portion 48B and the protruding plate portion 37B.

In the present embodiment, each of the proximity plate portions 43 of the electrode group retainer 23 is close to the electrode group 2 from the side where the lid member 5 is located in the height direction of the battery 1. Each of the facing surfaces 45 of the proximity plate portions 43 of the electrode group retainer 23 is formed to have a shape that is along the outer surface (curved surface 25) of the end portion of the electrode group 2 on the side where the lid member 5 is located. Therefore, each of the proximity plate portions 43 of the electrode group retainer 23 applies a force acting inward in the depth direction to the electrode group 2. Each of the proximity plate portions 43 applies a force to the electrode group 2 from both sides in the depth direction. In the battery 1, the internal components, including the electrode group 2, the current collecting tabs 15 and the leads 20, are restrained from moving in the depth direction by the force acting from the proximity plate portions 43 to the electrode group 2.

When the battery 1 is used, gas may be generated from the electrode group 2 in the inner cavity 8. Due to the generation of the gas in the inner cavity 8, the container 3 may expand. It should be noted here that in the battery 1, the outer surface area of each side wall 12 is much wider than each of the outer surface areas of the bottom wall 6, the side walls 11 and the lid member 5. Thus, the gas generated in the inner cavity 8 causes particularly each of the side walls 12 to expand outward.

As described above, in the present embodiment, the internal components, such as the electrode group 2, are restrained from moving in the depth direction of the battery 1, by each of the proximity plate portions 43. Therefore, even if the side walls 12 expand outward due to the generation of the gas, the proximity plate portions 43 restrain the internal components from moving in the depth direction of the battery 1. That is, even if the container 3 expands due to the generation of the gas, the internal components are properly restrained. Therefore, even if the gas is generated, the influence which an external impact may have on the internal components, including the electrode group 2, the current collecting tabs 15 and the leads 20, can be suppressed. Since the influence of the external impact on the internal components can be suppressed, damage to the internal components due to the external impact is prevented, and the durability of the internal components is improved.

In the present embodiment, a space is formed between each of the proximity plate portions 43 and the inner surface of the lid member 5 in the height direction of the battery 1. Therefore, the space between each of the proximity plate portions 43 and the lid member 5 functions as a flow path for a gas, an electrolytic solution, etc., and a fluid easily flows through the space between each of the proximity plate portions 43 and the lid member 5. Thus, the electrolytic solution injected from the liquid injection port 27 easily reaches the entire electrode group 2 through the space between each of the proximity plate portions 43 and the lid member 5, and the electrode group 2 is properly impregnated with the electrolyte solution. In addition, since the space is provided between each of the proximity plate portions 43 and the lid member 5, the volume which the electrode group retainer 23 occupies in the inner cavity 8 can be made small, and the space in the inner cavity 8 increases, accordingly. Since the space in the inner cavity 8 is increased, the expansion of the container 3 is suppressed even if the gas is generated from the electrode group 2.

In the electrode group retainer 23, the convex portion 48 protrudes from each of the proximity plate portions 43 toward the lid member 5, and each of the convex portions 48 contacts the inner surface of the lid member 5. Because of the convex portions 48 of the electrode group retainer 23, the electrode group 2 is appropriately supported by the lid member 5 with the convex portions 48 and the proximity plate portions 43 being interposed therebetween. Therefore, even if the battery 1 should drop and an external shock or the like is applied to the lid member 5, damage to the electrode group 2 or the like is effectively prevented, and the impact resistance of the electrode group 2 against the external shock or the like is improved.

In the battery 1, the proximity plate portions 43 of the electrode group retainer 23 are located apart from the current collecting tabs 15, the electrode terminals 16 and the leads 20 in the lateral direction. As a result, in the operation of electrically connecting each of the current collecting tabs 15 to the corresponding one of the electrode terminals 16, such as the operation of connecting each of the electrode terminals 16 to the top plate portion 31 of the corresponding one of the leads 20, interference or the like which may be caused by the proximity plate portions 43 is effectively prevented. This improves the workability of the operation of electrically connecting each of the current collecting tabs 15 to the corresponding one of the electrode terminals 16.

In addition, since the proximity plate portions 43 of the electrode group retainer 23 are shifted in the lateral direction of the battery 1 from the electrode terminals 16 etc., the area which the electrode group retainer 23 and the top plate portions 31 of the leads 20 occupy in the inner cavity 8 can be reduced in the height direction of the battery 1. Thus, the dimension of the electrode group 2 can be increased in the height direction of the battery 1 (in the width direction of the electrode group 2), so that the electrode group 2 can be increased in size. By increasing the size of the electrode group 2, the capacity and energy density of the battery 1 are improved.

In the battery 1, the proximity plate portions 43 of the electrode group retainer 23 are located apart from the liquid injection port 27 in the lateral direction. The proximity plate portions 43 do not prevent the diffusion of the electrolytic solution injected from the liquid injection port 27. This enables the electrolytic solution to easily reach the entire electrode group 2, and the electrode group 2 is impregnated with the electrolytic solution more appropriately.

The radius R2 of curvature of the facing surface 45 of each of the proximity plate portions 43 is set to be from 90% to 110% of the radius R2 of curvature of the curved surface 25 on the end portion of the electrode group 2 on the side where the lid member 5 is located. This enables each of the proximity plate portions 43 to more easily come into contact with the outer surface (including the curved surface 25) of the end portion of the electrode group 2 on the side where the lid member 5 is located. Thus, the internal components are restrained from moving in the depth direction of the battery 1 more appropriately by the proximity plate portions 43.

### (Modification)

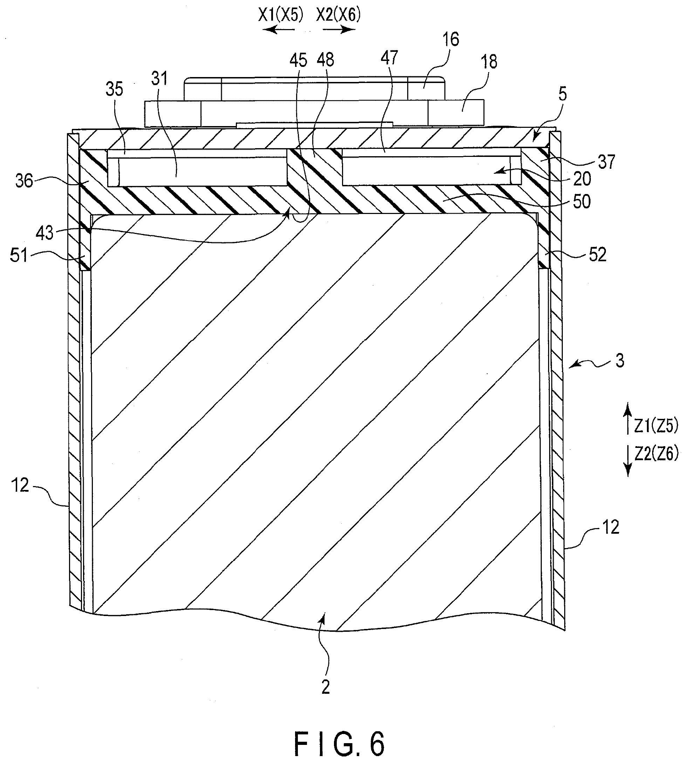

The electrode group 2 has a structure in which the positive electrode 13A, the negative electrode 13B, etc. are wound, with the winding axis B as a center, but the structure is not limited to this. In the modification shown in FIG. 6, the electrode group 2 has a stack structure in which a plurality of positive electrodes 13A and a plurality of negative electrodes 13B are alternately stacked. In the electrode group 2, a separator is interposed between the positive electrodes 13A and the negative electrodes 13B. In the present modification, the stacking direction of the positive electrodes 13A and negative electrodes 13B corresponds or substantially corresponds to the thickness direction of the electrode group 2.

In the battery 1 of the present modification as well, the electrode group 2 is arranged in the inner cavity 8 in the state where the width direction of the electrode group 2 corresponds or substantially corresponds to the height direction of the battery 1, and the thickness direction of the electrode group 2 corresponds or substantially corresponds to the depth direction of the battery 1. In the electrode group 2, the positive electrode current collecting tab 15A protrudes from the negative electrode 13B and the separator toward one side in the lateral direction of the battery 1, and the negative electrode current collecting tab 15B protrudes from the positive electrode 13A and the separator toward the side opposite to the side where the positive electrode current collecting tab 15A protrudes. In the present modification, the electrode group 2 is formed as described above, so that a curved surface 25 is not formed on the outer surface of the end portion of the electrode group 2 on the side where the lid member 5 is located.

In the present modification as well, the electrode group retainer 23 is provided with proximity plate portions 43. Each of the proximity plate portions 43 is close to the electrode group 2 from the side where the lid member 5 is located in the height direction of the battery 1. In the present modification, each of the proximity plate portions 43 includes a top portion 50 and a pair of side portions 51 and 52. In each of the proximity plate portions 43, the top portion 50 is provided between the corresponding one of the protruding plate portions 36 and the corresponding one of the protruding plate portions 37 such that it extends along the depth direction of the battery 1 (the width direction of the electrode group retainer 23). In each of the proximity plate portions 43, the side portion 51 is connected to one end of the top portion 50 in the depth direction of the battery 1, and the side portion 52 is connected to the other end of the top portion 50 which is opposite to the side portion 51 in the depth direction of the battery 1. Therefore, in each of the proximity plate portions 43, the side portions 51 and 52 are located apart from each other in the depth direction of the battery 1.

In the present modification as well, each of the proximity plate portions 43 includes a facing surface 45 that faces the electrode group 2. In the electrode group 2, the facing surfaces 45 of the proximity plate portions 43 are close to the outer surface of the end portion on the side where the lid member 5 is located. Therefore, in the present modification as well, the proximity plate portions 43 of the electrode group retainer 23 are close to a portion of the electrode group 2 different from the current collecting tab 15. In the present modification, each of the facing surfaces 45 of the proximity plate portions 43 is formed by the top portion 50 and the side portions 51 and 52. In the present modification as well, each of the facing surfaces 45 of the proximity plate portions 43 is formed to have a shape that is along the outer surface of the end portion of the electrode group 2 on the side where the lid member 5 is located. In the present modification, however, a curved surface 25 is not formed on the outer surface of the end portion of the electrode group 2 on the side where the lid member 5 is located. Therefore, each of the facing surfaces 45 of the proximity plate portions 43 is not curved.

As described above, in the present modification as well, each of the facing surfaces 45 of the proximity plate portions 43 of the electrode group retainer 23 is formed to have a shape that is along the outer surface of the end portion of the electrode group 2 on the side where the lid member 5 is located. Therefore, each of the proximity plate portions 43 of the electrode group retainer 23 applies a force acting inward in the depth direction to the electrode group 2. In the battery 1, the electrode group 2 and the internal components, including the current collecting tabs 15 and the leads 20, are restrained from moving in the depth direction by the force acting from the proximity plate portions 43 to the electrode group 2. In the present modification, each of the proximity plate portions 43 restrains movement of the internal components in the depth direction of the battery 1, by sandwiching the electrode group 2 between the side portions 51 and 52.

Since the present modification is configured as described above, even if the side walls 12 expand outward due to the generation of gas, the proximity plate portions 43 restrain the internal components from moving in the depth direction of the battery 1. That is, even if the container 3 expands due to the generation of gas, the internal components are appropriately restrained, as in the above-described embodiment.

In the electrode group retainer 23 of the present modification as well, convex portions 48 protrude from the proximity plate portions 43 toward the lid member 5, and each of the convex portions 48 contacts the inner surface of the lid member 5. In the present modification as well, the space between each of the proximity plate portions 43 and the lid member 5 functions as a flow path for gas, electrolytic solution, etc. In addition, since the space is provided between each of the proximity plate portions 43 and the lid member 5, the volume which the electrode group retainer 23 occupies in the inner cavity 8 can be small, and the space in the inner cavity 8 increases, accordingly. Therefore, the present modification also has similar advantages to those of the above-described embodiment.

It should be noted that the number of proximity plate portions 43 provided for the electrode group retainer 23 is not particularly limited as long as it is one or more. That is, it suffices that one or more proximity plate portions 43 are provided for the electrode group retainer 23, and that each of the proximity plate portions 43 is designed such that the facing surface 45 facing the electrode group 2 has a shape that is along the outer surface of the electrode group 2 on the side where the lid member 5 is located.

According to at least one of the embodiments or modification, the proximity plate portion is close to the electrode group from the side where the lid member is located in the height direction of the battery, and is provided is the electrode group retainer in the state where a space is formed between the inner surface of the lid member and thereof. The proximity plate portion is provided with facing surface that faces the electrode group, and the facing surface is formed to have a shape that is along the outer surface of the end portion of the electrode group on the side where the lid member is located. Accordingly, a battery can be provided in which internal components are properly restrained in the inner cavity thereof even if its container expands.

Although some embodiments of the invention have been described, these embodiments are for purposes of illustration and are not intended to limit the scope of the invention. These novel embodiments may be implemented in various other forms and may be omitted, substituted, or changed in various ways without departing from the gist of the invention. These embodiments and modifications thereof are included in the scope and gist of the invention and are included in the invention disclosed in the claims and the equivalent scope thereof.

## Claims

1. A battery comprising:
a container including a bottom wall and a peripheral wall and defining an inner cavity that is open in a height direction toward a side opposite to a side where the bottom wall is located;
a lid member attached to the peripheral wall of the container in a state in which an opening of the inner cavity is closed;
an electrode group including a positive electrode and a negative electrode and housed in the inner cavity of the container;
a current collecting tab protruding outward in the electrode group in a lateral direction intersecting the height direction;
an electrode terminal exposed on an outer surface of the lid member and electrically connected to the current collecting tab;
an electrode group retainer made of an electrically insulating material and arranged between the electrode group and the lid member in the inner cavity; and
a proximity plate portion provided in the electrode group retainer in a state where the proximity plate portion is close to the electrode group from a side where the lid member is located in the height direction and a space is formed between an inner surface of the lid member and the proximity plate portion, the proximity plate portion including a facing surface facing the electrode group and being formed to have a shape that is along an outer surface of an end portion of the electrode group on a side where the lid member is located.

2. The battery according to claim 1, wherein
the electrode group retainer includes a convex portion that protrudes from the proximity plate portion toward the lid member, and
the convex portion of the electrode group retainer contacts the inner surface of the lid member.

3. The battery according to claim 1 or 2, wherein
the proximity plate portion of the electrode group retainer applies, to the electrode group, a force acting inward in a depth direction intersecting both the height direction and the lateral direction.

4. The battery according to any one of claims 1 to 3, wherein
in the electrode group, the proximity plate portion of the electrode group retainer is close to a portion different from the current collecting tab.

5. The battery according to any one of claims 1 to 4, further comprising:
a lead arranged in the inner cavity and forming at least a part of an electrical path between the current collecting tab and the electrode terminal,
wherein the proximity plate portion of the electrode group retainer is located apart from the current collecting tab, the electrode terminal and the lead in the lateral direction.

6. The battery according to any one of claims 1 to 5, wherein
the lid member has a liquid injection port penetrating from the outer surface to the inner surface, and
the proximity plate portion of the electrode group retainer is located away from the liquid injection port in the lateral direction.

7. The battery according to any one of claims 1 to 6, wherein
in the electrode group, the positive electrode and the negative electrode are wound, with a winding axis extending along the lateral direction as a center,
the outer surface of the end portion of the electrode group on a side where the lid member is located is formed as a curved surface that is arcuate in a cross section perpendicular to the lateral direction, and
the facing surface of the proximity plate portion is formed as a curved face which is arcuate in a cross section perpendicular to the lateral direction and which is along the curved surface of the end portion of the electrode group on the side where the lid member is located.

8. The battery according to claim 7, wherein
a radius of curvature of the facing surface of the proximity plate portion is from 90% to 110% of a radius of curvature of the curved surface of the end portion of the electrode group on the side where the lid member is located.

9. The battery according to any one of claims 1 to 8, wherein
the current collecting tab includes a positive electrode current collecting tab protruding toward one side in the lateral direction in the electrode group, and a negative electrode current collecting tab protruding toward a side opposite to a side where the positive electrode current collecting tab protrudes in the electrode group, and
the electrode terminal includes a positive electrode terminal electrically connected to the positive electrode current collecting tab, and a negative electrode terminal arranged on the outer surface of the lid member at a position apart from the positive electrode terminal and electrically connected to the negative electrode current collecting tab.

10. The battery according to claim 9, wherein
the proximity plate portion of the electrode group retainer is located between the positive electrode current collecting tab and the negative electrode current collecting tab and between the positive electrode terminal and the negative electrode terminal in the lateral direction.
